(19)

**Europäisches Patentamt**
**European Patent Office**
**Office européen des brevets**

(11)  **EP 4 417 994 B1**

(12)  **EUROPEAN PATENT SPECIFICATION**

(45) Date of publication and mention
of the grant of the patent:
**17.12.2025  Bulletin 2025/51**

(21) Application number: **23218576.9**

(22) Date of filing: **20.12.2023**

(51) International Patent Classification (IPC):
***G01C 21/16*** *(2006.01)*      ***G01C 21/30*** *(2006.01)*
***G01S 5/00*** *(2006.01)*       ***G01S 19/48*** *(2010.01)*
***G01S 19/43*** *(2010.01)*      ***G01S 19/50*** *(2010.01)*

(52) Cooperative Patent Classification (CPC):
***G01C 21/30; G01C 21/165; G01S 5/01;***
***G01S 19/48;*** G01S 19/43; G01S 19/50; Y02T 10/40

(54) **POSITIONING METHOD FOR AUTONOMOUS VEHICLE, APPARATUS, READABLE STORAGE MEDIUM AND VEHICLE**

POSITIONIERUNGSVERFAHREN FÜR AUTONOMES FAHRZEUG, VORRICHTUNG, LESBARES SPEICHERMEDIUM UND FAHRZEUG

PROCÉDÉ DE POSITIONNEMENT POUR VÉHICULE AUTONOME, APPAREIL, SUPPORT D'INFORMATIONS LISIBLE ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **16.02.2023  CN 202310122887**

(43) Date of publication of application:
**21.08.2024  Bulletin 2024/34**

(73) Proprietor: **Anhui NIO Autonomous Driving
Technology Co., Ltd.
Hefei, Anhui 230601 (CN)**

(72) Inventors:
• **SHEN, Dayun
Hefei, Anhui Province, 230601 (CN)**
• **YUAN, Hongyuan
Hefei, Anhui Province, 230601 (CN)**
• **YI, Shichun
Hefei, Anhui Province, 230601 (CN)**
• **YANG, Dongsheng
Hefei, Anhui Province, 230601 (CN)**

(74) Representative: **Vossius & Partner
Patentanwälte Rechtsanwälte mbB
Siebertstrasse 3
81675 München (DE)**

(56) References cited:
**US-A1- 2011 118 979     US-A1- 2019 094 883
US-A1- 2021 156 711**

## Description

The present application claims priority of CN patent application 202310122887.0 filed on February 16, 2023 with the title "Positioning method for autonomous vehicle, apparatus, readable storage medium and vehicle".

## Technical Field

The disclosure relates to the field of autonomous driving technologies, and provides a positioning method for an autonomous vehicle, a control apparatus, a readable storage medium, and a vehicle.

## Background Art

When global positioning is performed for autonomous driving, there is a need for fusion of data from a plurality of positioning sensors, such as real-time kinematic (RTK) positioning and map matching positioning. However, due to problems in the map making process and regulation-based offset adding plug-ins, lateral positioning errors may be caused for both, and the performance varies on different road sections. A current mainstream approach is to fuse lateral information of a map matching positioning result and longitudinal information of a real-time dynamic differential positioning result. However, this may lose lateral constraint information of the real-time dynamic differential positioning result. On some road sections without map matching (for example, in rainy and snowy weather, visual conditions are poor, a perception false detection rate is high, etc.), global positioning will quickly lose accurate positioning capabilities, which will not only reduce the safety of autonomous driving, but also greatly degrade autonomous driving experience of users.

Accordingly, there is a need for a novel positioning solution for autonomous driving to solve the above problems in the art.

US 2019/0094883 A1 discloses a position determination apparatus for a vehicle which includes: a first sensing unit configured to sense driving state information of the vehicle; a GNSS module configured to acquire position data of the vehicle; a first core unit configured to generate a first driving trajectory of the vehicle based on the driving state information sensed by the first sensing unit.

US 2021/0156711 A1 discloses a method for analyzing localization errors, wherein the method includes the steps of obtaining relative positions and absolute positions of an object moving within a mapped environment, which are generated sequentially over time. Differences between the relative positions and absolute positions are estimated to determine sequential localization errors.

US 2011/0118979 A1 disclose a method of operating an automotive location system which includes a step of providing a timely warning if the system cannot satisfy predetermined performance criteria. An example method may include ascertaining a satellite-based position estimation ascertaining a dead reckoning position estimation, determining a location estimation by combining the satellite position estimation and the dead reckoning position estimation, determining a map-matching position, and determining an integrity of the location estimation by comparing a test statistic calculated by evaluating the map-matching position and the location estimation with a decision threshold based upon a predetermined location estimation accuracy specification.

## Summary

To overcome the above defects, the disclosure is proposed to solve or at least partially solve the problem of how to effectively improve the safety of autonomous driving and usage experience of users. The subject-matter of the present invention is defined by the features of the independent claims. Further preferred embodiments of the present invention are defined in the dependent claims.

In a first aspect, the disclosure provides a positioning method for an autonomous vehicle, the method including:

when both a map matching result and a real-time dynamic differential positioning result of the autonomous vehicle exist, obtaining deviation data between the map matching result and the real-time dynamic differential positioning result in real time by applying a Kalman filter algorithm; and
when the map matching result or the real-time dynamic differential positioning result is missing, obtaining a global positioning result of the autonomous vehicle based on the deviation data obtained. The obtaining a global positioning result of the autonomous vehicle based on the deviation data obtained comprises: when the map matching result is missing, obtaining the map matching result based on the real-time dynamic differential positioning result and the deviation data; and obtaining the global positioning result of the autonomous vehicle based on the real-time dynamic differential positioning result and the map matching result obtained.

In a technical solution of the above positioning method for an autonomous vehicle, the obtaining deviation data between the map matching result and the real-time dynamic differential positioning result in real time by applying a Kalman filter algorithm comprises:

establishing an observation equation of the Kalman filter algorithm, a state quantity of the observation equation being an observed value of the deviation data;
establishing a measurement equation of the Kalman filter algorithm based on the map matching result and the real-time dynamic differential positioning result;
obtaining a residual of the Kalman filter algorithm according to the observation equation and the measurement equation; and
performing an iterative update on the observed value of the deviation data based on the residual and observed noise of the Kalman filter algorithm, to obtain the deviation data in real time.

In a technical solution of the above positioning method for an autonomous vehicle, the method further comprises obtaining current observed noise of the Kalman filter algorithm according to the following steps:

when both the map matching result and the real-time dynamic differential positioning result of the autonomous vehicle exist, obtaining the current observed noise based on the map matching result and the real-time dynamic differential positioning result; and
when the map matching result or the real-time dynamic differential positioning result of the autonomous vehicle does not exist, obtaining the current observed noise based on a preset empirical value or observed noise at the previous moment.

In a technical solution of the above positioning method for an autonomous vehicle, the obtaining the current observed noise based on the map matching result and the real-time dynamic differential positioning result comprises:

separately transforming the map matching result and the real-time dynamic differential positioning result within a preset historical time period before a current moment into a vehicle body coordinate system;
obtaining, based on a map matching result and a real-time dynamic differential positioning result in the vehicle body coordinate system, deviation data between the map matching result and the real-time dynamic differential positioning result; and
obtaining the current observed noise based on a variance of the deviation data within the preset historical time period.

In a technical solution of the above positioning method for an autonomous vehicle, the obtaining a global positioning result of the autonomous vehicle based on the deviation data obtained comprises:

obtaining the real-time dynamic differential positioning result based on the map matching result and the deviation data when the real-time dynamic differential positioning result is missing; and
obtaining the global positioning result of the autonomous vehicle based on the real-time dynamic differential positioning result obtained and the map matching result.

In a technical solution of the above positioning method for an autonomous vehicle, the deviation data is a lateral deviation between the map matching result and the real-time dynamic differential positioning result.

In a second aspect, a control apparatus is provided. The control apparatus includes a processor and a storage apparatus storing a plurality of program codes, where the program codes are adapted to be loaded and executed by the processor to perform the positioning method for an autonomous vehicle in any one of the technical solutions of the above positioning method for an autonomous vehicle.

In a third aspect, a computer-readable storage medium is provided. The computer-readable storage medium stores a plurality of program codes, where the program codes are adapted to be loaded and executed by a processor to perform the positioning method for an autonomous vehicle in any one of the technical solutions of the above positioning method for an autonomous vehicle.

In a fourth aspect, a vehicle is provided. The vehicle includes the control apparatus in the technical solution of the control apparatus.

The above one or more technical solutions of the disclosure have at least one or more of the following beneficial effects:

In the technical solutions implementing the disclosure, the disclosure applies the Kalman filter algorithm to perform real-time estimations on the deviation data between the map matching result and the real-time dynamic differential positioning result of the autonomous vehicle, so that the deviation data between the map matching result and the real-time dynamic differential positioning result can be accurately estimated. Therefore, when the map matching result or the real-time dynamic differential positioning result is missing, the map matching result or the real-time dynamic differential positioning result can be compensated based on the real-time estimated deviation data, thereby ensuring a global positioning capability of the autonomous vehicle. Through the above configuration method, according to the disclosure, the deviation data between the map matching result and the real-time differential positioning result can be effectively utilized, which can ensure that autonomous driving functions are enabled on the autonomous vehicle in more scenarios while ensuring the safety of the autonomous vehicle, thereby effectively improving usage experience of users.

## Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic flowchart of main steps of a positioning method for an autonomous vehicle according to an embodiment of the disclosure;
FIG. 2 is a schematic flowchart of main steps of obtaining deviation data by applying a Kalman filter algorithm according to an implementation of an embodiment of the disclosure; and
FIG. 3 is a schematic flowchart of main steps of obtaining current observed noise of a Kalman filter algorithm according to an implementation of an embodiment of the disclosure.

## Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program codes, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

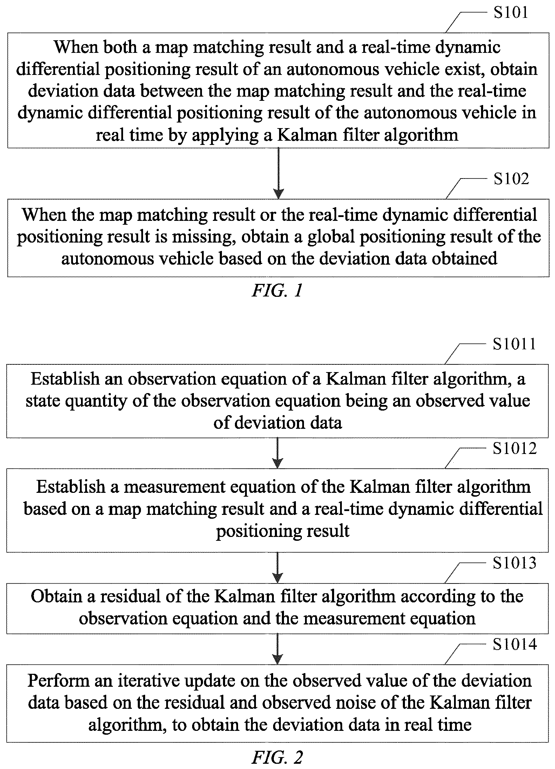

Referring to FIG. 1, FIG. 1 is a schematic flowchart of main steps of a positioning method for an autonomous vehicle according to an embodiment of the disclosure. As shown in FIG. 1, the positioning method for an autonomous vehicle in this embodiment of the disclosure mainly includes the following step S101 and step S102.

Step S101: When both a map matching result and a real-time dynamic differential positioning result of the autonomous vehicle exist, obtain deviation data between the map matching result and the real-time dynamic differential positioning result of the autonomous vehicle in real time by applying a Kalman filter algorithm.

In this embodiment, when both the map matching result and the real-time dynamic differential positioning result of the autonomous vehicle exist, real-time estimations may be performed on the deviation data between the map matching result and the real-time kinematic (RTK) positioning result of the autonomous vehicle by applying the Kalman filter algorithm. Since there may be errors in both an observation result and a measurement result, applying the Kalman filter algorithm to estimate an observation result of a current state based on an observation result of a previous state and a measurement result of the current state can obtain more accurate deviation data.

In an implementation, the deviation data may be deviation data between the map matching result and the real-time dynamic differential positioning result in a vehicle body coordinate system of the autonomous vehicle.

In an implementation, the deviation data may include a lateral deviation, a longitudinal deviation, and an elevation deviation. The lateral deviation may be a difference between the map matching result and the real-time dynamic differential positioning result in a y-axis direction in the vehicle body coordinate system. The longitudinal deviation may be a difference between the map matching result and the real-time dynamic differential positioning result in an x-axis direction in the vehicle body coordinate system. The elevation deviation may be a difference between the map matching result and the real-time dynamic differential positioning result in a z-axis direction in the vehicle body coordinate system.

In an implementation, since the map matching result is obtained by matching between a map and lane lines, confidence levels of the longitudinal deviation and the elevation deviation between the map matching result and the real-time dynamic differential positioning result are low. Therefore, the deviation data may include only the lateral deviation.

Step S102: When the map matching result or the real-time dynamic differential positioning result is missing, obtain a global positioning result of the autonomous vehicle based on the deviation data obtained.

In this embodiment, when the map matching result or the real-time dynamic differential positioning result is missing, the global positioning result of the autonomous vehicle may be obtained based on the deviation data during real-time positioning of the autonomous vehicle.

In an implementation, during real-time positioning of the autonomous vehicle, if the map matching result or the real-time dynamic differential positioning result cannot be obtained due to an impact of environmental factors, traffic jams, or other factors, the deviation data obtained by applying the Kalman filter algorithm can be used to estimate a positioning result that cannot be obtained, so that the estimated positioning result is fused with a known positioning result to obtain the global positioning result of the autonomous vehicle.

Based on the above step S101 to step S102, in this embodiment of the disclosure, the Kalman filter algorithm is applied to perform real-time estimations on the deviation data between the map matching result and the real-time dynamic differential positioning result of the autonomous vehicle, so that the deviation data between the map matching result and the real-time dynamic differential positioning result can be accurately estimated. Therefore, when the map matching result or the real-time dynamic differential positioning result is missing, the map matching result or the real-time dynamic differential positioning result can be compensated based on the real-time estimated deviation data, thereby ensuring a global positioning capability of the autonomous vehicle. Through the above configuration method, according to this embodiment of the disclosure, the deviation data between the map matching result and the real-time differential positioning result can be effectively utilized, which can ensure that autonomous driving functions are enabled on the autonomous vehicle in more scenarios while ensuring the safety of the autonomous vehicle, thereby effectively improving usage experience of users.

Step S101 and step S102 will be further described separately below.

Referring to FIG. 2, FIG. 2 is a schematic flowchart of main steps of obtaining deviation data by applying a Kalman filter algorithm according to an implementation of an embodiment of the disclosure. As shown in FIG. 2, in an implementation of this embodiment of the disclosure, step S101 may include the following step S1011 to step S1014.

Step S1011: Establish an observation equation of the Kalman filter algorithm, a state quantity of the observation equation being an observed value of the deviation data.

In this implementation, the observation equation of the Kalman filter algorithm may be established, and the state quantity of the observation equation may be the observed value of the deviation data.

In an implementation, the observation equation may be obtained according to the following formula (1):

$$h(x) = -AX \quad (1)$$

where $X = P_{hon\text{-}ver\text{-}bias}$ represents the deviation data between the map matching result and the real-time differential positioning result, and includes a lateral deviation, a longitudinal deviation, and an elevation deviation;

$$A = \begin{bmatrix} 0 & 1 & 0 \end{bmatrix}.$$

Step S1012: Establish a measurement equation of the Kalman filter algorithm based on the map matching result and the real-time dynamic differential positioning result.

In this implementation, the measurement equation may be established based on the map matching result and the real-time dynamic differential positioning result.

In an implementation, the measurement equation may be obtained according to the following formula (2):

$$z = A R_{vechie}^{global^T} \left[ P_{mapmatching} - P_{rtk} \right] \quad (2)$$

where $R_{vechie}^{global^T}$ is a transpose of a rotation matrix from the vehicle body coordinate system to a global coordinate system, $P_{mapmatching}$ is a map matching result in the global coordinate system, and $P_{rtk}$ is a real-time dynamic differential positioning result in the global coordinate system. Both the map matching result and the real-time dynamic differential positioning result may be transformed into the global coordinate system according to the following formula (3):

$$P^{global}_{wheel} = P^{global}_{sensor} + R^{global}_{sensor} * P^{sensor}_{wheel} \quad (3)$$

where $P^{global}_{wheel}$ represents the map matching result or the real-time dynamic differential positioning result in the global coordinate system, $P^{global}_{sensor}$ is a map matching position or RTK position in the global coordinate system, $P^{global}_{sensor}$ is a rotation matrix from a map matching coordinate system or an RTK coordinate system to the global coordinate system, $P^{sensor}_{wheel}$ is a position of the map matching result or the real-time dynamic differential positioning result in the map matching coordinate system or RTK coordinate system.

Step S1013: Obtain a residual of the Kalman filter algorithm according to the observation equation and the measurement equation.

In this implementation, the residual may be obtained according to the observation equation and the measurement equation.

In an implementation, the residual *Residual* may be obtained according to the following formula (4):

$$Residual = z - h(x) \quad (4)$$

In an implementation, a Jacobian matrix H of the Kalman filter algorithm is obtained according to the following formula (5):

$$H = -A \quad (5)$$

Step S1014: Perform an iterative update on the observed value of the deviation data based on the residual and observed noise of the Kalman filter algorithm, to obtain the deviation data in real time.

In this implementation, an iterative update may be performed on the observed value of the deviation data based on the residual and the observed noise, so as to obtain the deviation data in real time.

In an implementation, a Kalman equation of the Kalman filter algorithm may be obtained according to the following formulas (6) to (10):

$$\hat{x}'_k = A\hat{x}_{k-1} + Bu_{k-1} \quad (6)$$

$$P'_k = AP_{k-1} + Q \quad (7)$$

$$K_k = P'_k H^T (HP'_k H^T + R)^{-1} \quad (8)$$

$$x_k = x'_k + K_k(z_k - Hx'_k) \quad (9)$$

$$P_k = (I - K_k H)P'_k \quad (10)$$

where $x_k$ is a state at a moment k; $\hat{x}'_k$ is a predicted state at the moment k (not optimized); $z_k$ is an observed value at the moment k; *B* is an input control matrix; Q is prediction noise; R is observed noise; $P_k$ is an error at the moment k; $K_k$ is a

Kalman gain at the moment k; $u_{k-1}$ is an external effect on a system at a moment k-1; and $z_k - Hx_k^{'}$ is a residual *Residual* at the moment k.

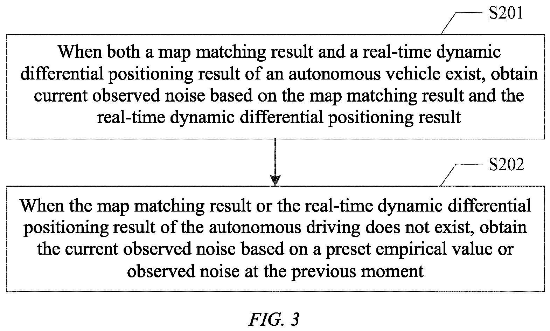

In an implementation, referring to FIG. 3, FIG. 3 is a schematic flowchart of main steps of obtaining current observed noise of a Kalman filter algorithm according to an implementation of an embodiment of the disclosure. As shown in FIG. 3, the current observed noise of the Kalman filter algorithm may be obtained through the following step S201 and step S202.

Step S201: When both the map matching result and the real-time dynamic differential positioning result of the autonomous vehicle exist, obtain the current observed noise based on the map matching result and the real-time dynamic differential positioning result.

In this implementation, step S201 may further include the following step S2011 to step S2013.

Step S2011: Separately transform the map matching result and the real-time dynamic differential positioning result within a preset historical time period before a current moment into a vehicle body coordinate system.

Step S2012: Obtain, based on a map matching result and a real-time dynamic differential positioning result in the vehicle body coordinate system, deviation data between the map matching result and the real-time dynamic differential positioning result.

Step S2013: Obtain the current observed noise based on a variance of the deviation data within the preset historical time period.

In this implementation, the map matching result and the real-time dynamic differential positioning result within the historical time period before the current moment may be collected, and the map matching result and the real-time dynamic differential positioning result may be transformed into the global coordinate system according to the following formulas (11) and (12):

$$P_{wheel\_by\_rtk}^{global} = P_{rtk}^{global} + R_{rtk}^{global} * P_{wheel}^{rtk} \qquad (11)$$

where $P_{wheel\_by\_rtk}^{global}$ represents a real-time dynamic differential positioning result in the global coordinate system, $P_{rtk}^{global}$ is an RTK position in the global coordinate system, $R_{rtk}^{global}$ is a rotation matrix from an RTK coordinate system to the global coordinate system, and $P_{wheel}^{rtk}$ is a position of the real-time dynamic differential positioning result in the RTK coordinate system.

$$P_{wheel\_by\_mm}^{global} = P_{mm}^{global} + R_{mm}^{global} * P_{wheel}^{mm} \qquad (12)$$

where $P_{wheel\_by\_mm}^{global}$ represents a map matching result in the global coordinate system, $P_{mm}^{global}$ is a map matching position in the global coordinate system, $R_{mm}^{global}$ is a rotation matrix from a map matching coordinate system to the global coordinate system, and $P_{wheel}^{mm}$ is a position of the map matching result in the map matching coordinate system.

The deviation data between the map matching result and the real-time dynamic differential positioning result is obtained according to the following formula (13):

$$P_{diff} = R_{global}^{wheel} * \left( P_{wheel\_by\_rtk}^{global} - P_{wheel\_by\_mm}^{global} \right) \qquad (13)$$

where $P_{diff}$ is the deviation data, and $R_{global}^{wheel}$ is the rotation matrix from the global coordinate system to the vehicle body coordinate system.

The statistics on deviation data within the preset historical time period may be collected according to formulas (11) to (13), and the variance of the deviation data is calculated as the current observed noise.

In an implementation, statistics on a lateral deviation within the preset historical time period may be collected according to formulas (11) to (13), and a variance of the lateral deviation is calculated as the current observed noise.

Step S202: When the map matching result or the real-time dynamic differential positioning result of the autonomous driving does not exist, obtain the current observed noise based on a preset empirical value or observed noise at the previous moment.

In this implementation, if a current map matching result or a real-time dynamic differential positioning result does not exist, the current observed noise may be determined based on an empirical value or the observed noise at the previous moment. For example, during an initial iteration of the Kalman filter algorithm, current observed noise of the algorithm may be set to the empirical value. For example, when the map matching result or the real-time dynamic differential positioning result has just restored, the observed noise at the previous moment may be used as the current observed noise.

In an implementation, the empirical value of the observed noise is $R = 1$.

In an implementation of this embodiment of the disclosure, step S102 may include the following step S1021 and step S1022.

Step S1021: When the map matching result is missing, obtain the map matching result based on the real-time dynamic differential positioning result and the deviation data.

Step S1022: Obtain the global positioning result of the autonomous vehicle based on the real-time dynamic differential positioning result and the map matching result obtained.

In this implementation, when performing real-time positioning of the autonomous vehicle, if the map matching result is missing, the map matching result may be obtained based on the real-time dynamic differential positioning result and the deviation data obtained by applying the Kalman filter algorithm, which can implement fusion between the map matching result and the real-time dynamic differential positioning result, to obtain the global positioning result of the autonomous vehicle, thereby ensuring that autonomous driving functions can be enabled on the autonomous vehicle.

In an implementation of this embodiment of the disclosure, step S102 may further include the following step S1023 and step S1024.

Step S1023: Obtain the real-time dynamic differential positioning result based on the map matching result and the deviation data when the real-time dynamic differential positioning result is missing.

Step S1024: Obtain the global positioning result of the autonomous vehicle based on the real-time dynamic differential positioning result obtained and the map matching result.

In this implementation, when performing real-time positioning of the autonomous vehicle, if the real-time dynamic differential positioning result is missing, the real-time dynamic differential positioning result may be obtained based on the map matching result and the deviation data obtained by applying the Kalman filter algorithm, which can implement fusion between the map matching result and the real-time dynamic differential positioning result, to obtain the global positioning result of the autonomous vehicle, thereby ensuring that autonomous driving functions can be enabled on the autonomous vehicle.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program codes, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes a processor and a storage apparatus. The storage apparatus may be configured to store a program for performing the positioning method for an autonomous vehicle in the above method embodiments. The processor may be configured to execute a program in the storage apparatus, where the program includes, but is not limited to, the program for performing the positioning method for an autonomous vehicle in the above method embodiments. For ease of description, only parts related to the embodiments of the disclosure are shown. For specific technical details that are not disclosed, reference may be made to the method part of the embodiments of the disclosure.

The control apparatus in this embodiment of the disclosure may be a control apparatus formed by various electronic devices. In some possible implementations, the control apparatus may include a plurality of storage apparatuses and a plurality of processors. The program for performing the positioning method for an autonomous vehicle in the above method embodiments may be divided into a plurality of segments of subprogram, and each segment of subprogram may be loaded and executed by a processor to perform a different step of the positioning method for an autonomous vehicle in the above method embodiments. Optionally, each segment of subprogram may be stored in a different storage apparatus, and each processor may be configured to execute programs in one or more storage apparatuses to jointly implement the positioning method for an autonomous vehicle in the above method embodiments. In other words, each processor performs a different step of the positioning method for an autonomous vehicle of the above method embodiments, to jointly implement the positioning method for an autonomous vehicle in the above method embodiments.

The plurality of processors may be processors deployed on a same device. For example, the foregoing control apparatus may be a high-performance device including a plurality of processors, and the plurality of processors may be processors configured on the high-performance device. Alternatively, the plurality of processors may be processors deployed on different devices. For example, the foregoing control apparatus may be a server cluster, and the plurality of processors may be processors on different servers in the server cluster.

Further, the disclosure further provides a computer-readable storage medium. In an embodiment of the computer-readable storage medium according to the disclosure, the computer-readable storage medium may be configured to store a program for performing the positioning method for an autonomous vehicle in the above method embodiments, and the program may be loaded and run by a processor to implement the above positioning method for an autonomous vehicle. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In a vehicle embodiment according to the disclosure, the vehicle may include the control apparatus in the control apparatus embodiment.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations.

## Claims

1.    A positioning method for an autonomous vehicle, the method comprising:

when (S101) both a map matching result and a real-time dynamic differential positioning result of the autonomous vehicle exist, obtaining deviation data between the map matching result and the real-time dynamic differential positioning result in real time by applying a Kalman filter algorithm; and
when (S102) the map matching result or the real-time dynamic differential positioning result is missing, obtaining a global positioning result of the autonomous vehicle based on the deviation data obtained;
the obtaining a global positioning result of the autonomous vehicle based on the deviation data obtained comprises:

when the map matching result is missing, obtaining the map matching result based on the real-time dynamic differential positioning result and the deviation data; and
obtaining the global positioning result of the autonomous vehicle based on the real-time dynamic differential positioning result and the map matching result obtained.

2. The positioning method for an autonomous vehicle according to claim 1, wherein
the obtaining deviation data between the map matching result and the real-time dynamic differential positioning result in real time by applying a Kalman filter algorithm comprises:

establishing (S1011) an observation equation of the Kalman filter algorithm, a state quantity of the observation equation being an observed value of the deviation data;
establishing (S1012) a measurement equation of the Kalman filter algorithm based on the map matching result and the real-time dynamic differential positioning result;
obtaining (S1013) a residual of the Kalman filter algorithm according to the observation equation and the measurement equation; and
performing (S1014) an iterative update on the observed value of the deviation data based on the residual and observed noise of the Kalman filter algorithm, to obtain the deviation data in real time.

3. The positioning method for an autonomous vehicle according to claim 2, further comprising obtaining current observed noise of the Kalman filter algorithm according to the following steps:

when (S201) both the map matching result and the real-time dynamic differential positioning result of the autonomous vehicle exist, obtaining the current observed noise based on the map matching result and the real-time dynamic differential positioning result; and
when (S202) the map matching result or the real-time dynamic differential positioning result of the autonomous vehicle does not exist, obtaining the current observed noise based on a preset empirical value or observed noise at the previous moment.

4. The positioning method for an autonomous vehicle according to claim 3, wherein
the obtaining the current observed noise based on the map matching result and the real-time dynamic differential positioning result comprises:

separately transforming the map matching result and the real-time dynamic differential positioning result within a preset historical time period before a current moment into a vehicle body coordinate system;
obtaining, based on a map matching result and a real-time dynamic differential positioning result in the vehicle body coordinate system, deviation data between the map matching result and the real-time dynamic differential positioning result; and
obtaining the current observed noise based on a variance of the deviation data within the preset historical time period.

5. The positioning method for an autonomous vehicle according to any one of claims 1 to 4, wherein the obtaining a global positioning result of the autonomous vehicle based on the deviation data obtained comprises:

obtaining the real-time dynamic differential positioning result based on the map matching result and the deviation data when the real-time dynamic differential positioning result is missing; and
obtaining the global positioning result of the autonomous vehicle based on the real-time dynamic differential positioning result obtained and the map matching result.

6. The positioning method for an autonomous vehicle according to any one of claims 1 to 5, wherein the deviation data is a lateral deviation between the map matching result and the real-time dynamic differential positioning result.

7. A control apparatus, comprising a processor and a storage apparatus storing a plurality of program codes, wherein the program codes are adapted to be loaded and executed by the processor to perform the positioning method for an autonomous vehicle according to any one of claims 1 to 6.

8. A non-transitory computer-readable storage medium storing a plurality of program codes, wherein the program codes are adapted to be loaded and executed by a processor to perform the positioning method for an autonomous vehicle according to any one of claims 1 to 6.

9. A vehicle, comprising the control apparatus according to claim 7.

**Patentansprüche**

1. Positionierungsverfahren für ein autonomes Fahrzeug, das Verfahren umfassend:

   wenn (S101) sowohl ein Kartenabgleichsergebnis als auch ein Ergebnis einer dynamischen Differenzialpositionierung in Echtzeit des autonomen Fahrzeugs vorhanden ist, Erhalten von Abweichungsdaten zwischen dem Kartenabgleichsergebnis und dem Ergebnis einer dynamischen Differenzialpositionierung in Echtzeit durch Anwenden eines Kalman-Filter-Algorithmus; und
   wenn (S102) das Kartenabgleichsergebnis oder das Ergebnis einer dynamischen Differenzialpositionierung in Echtzeit fehlt, Erhalten eines Ergebnisses einer globalen Positionierung des autonomen Fahrzeugs basierend auf den erhaltenen Abweichungsdaten;
   wobei das Erhalten eines Ergebnisses einer globalen Positionierung des autonomen Fahrzeugs basierend auf den erhaltenen Abweichungsdaten umfasst:

   wenn das Kartenabgleichsergebnis fehlt, Erhalten des Kartenabgleichsergebnisses basierend auf dem Ergebnis einer dynamischen Differenzialpositionierung in Echtzeit und den Abweichungsdaten und
   Erhalten des Ergebnisses einer globalen Positionierung des autonomen Fahrzeugs basierend auf dem Ergebnis einer dynamischen Differenzialpositionierung in Echtzeit und dem erhaltenen Kartenabgleichsergebnis.

2. Positionierungsverfahren für ein autonomes Fahrzeug nach Anspruch 1, wobei
   das Erhalten von Abweichungsdaten zwischen dem Kartenabgleichsergebnis und dem Ergebnis einer dynamischen Differenzialpositionierung in Echtzeit durch Anwenden eines Kalman-Filter-Algorithmus umfasst:

   Aufstellen (S1011) einer Beobachtungsgleichung des Kalman-Filter-Algorithmus, wobei eine Zustandsgröße der Beobachtungsgleichung ein beobachteter Wert der Abweichungsdaten ist;
   Aufstellen (S1012) einer Messgleichung des Kalman-Filter-Algorithmus basierend auf dem Kartenabgleichsergebnis und dem Ergebnis einer dynamischen Differenzialpositionierung in Echtzeit;
   Erhalten (S1013) eines Rests des Kalman-Filter-Algorithmus gemäß der Beobachtungsgleichung und der Messgleichung und
   Durchführen (S1014) einer iterativen Aktualisierung am beobachteten Wert der Abweichungsdaten basierend auf dem Rest und beobachtetem Rauschen des Kalman-Filter-Algorithmus, um die Abweichungsdaten in Echtzeit zu erhalten.

3. Positionierungsverfahren für ein autonomes Fahrzeug nach Anspruch 2, ferner umfassend ein Erhalten eines aktuellen beobachteten Rauschens des Kalman-Filter-Algorithmus gemäß den folgenden Schritten:

   wenn (S201) sowohl das Kartenabgleichsergebnis als auch das Ergebnis einer dynamischen Differenzialpositionierung in Echtzeit des autonomen Fahrzeugs vorhanden ist, Erhalten des aktuellen beobachteten Rauschens basierend auf dem Kartenabgleichsergebnis und dem Ergebnis einer dynamischen Differenzialpositionierung in Echtzeit; und
   wenn (S202) das Kartenabgleichsergebnis oder das Ergebnis einer dynamischen Differenzialpositionierung in Echtzeit des autonomen Fahrzeugs nicht vorhanden ist, Erhalten des aktuellen beobachteten Rauschens basierend auf einem voreingestellten empirischen Wert oder beobachtetem Rauschen zum vorhergehenden Moment.

4. Positionierungsverfahren für ein autonomes Fahrzeug nach Anspruch 3, wobei
   das Erhalten des aktuellen beobachteten Rauschens basierend auf dem Kartenabgleichsergebnis und dem Ergebnis einer dynamischen Differenzialpositionierung in Echtzeit umfasst:

   getrenntes Umwandeln des Kartenabgleichsergebnisses und des Ergebnisses einer dynamischen Differenzialpositionierung in Echtzeit innerhalb eines voreingestellten historischen Zeitraums vor einem aktuellen Moment in ein Fahrzeugkarosseriekoordinatensystem;
   Erhalten, basierend auf einem Kartenabgleichsergebnis und einem Ergebnis einer dynamischen Differenzialpositionierung in Echtzeit im Fahrzeugkarosseriekoordinatensystem, von Abweichungsdaten zwischen dem Kartenabgleichsergebnis und dem Ergebnis einer dynamischen Differenzialpositionierung in Echtzeit und
   Erhalten des aktuellen beobachteten Rauschens basierend auf einer Varianz der Abweichungsdaten innerhalb des voreingestellten historischen Zeitraums.

**5.** Positionierungsverfahren für ein autonomes Fahrzeug nach einem der Ansprüche 1 bis 4, wobei das Erhalten eines Ergebnisses einer globalen Positionierung des autonomen Fahrzeugs basierend auf den erhaltenen Abweichungsdaten umfasst:

Erhalten des Ergebnisses einer dynamischen Differenzialpositionierung in Echtzeit basierend auf dem Kartenabgleichsergebnis und den Abweichungsdaten, wenn das Ergebnis einer dynamischen Differenzialpositionierung in Echtzeit fehlt; und
Erhalten des Ergebnisses einer globalen Positionierung des autonomen Fahrzeugs basierend auf dem erhaltenen Ergebnis einer dynamischen Differenzialpositionierung in Echtzeit und dem Kartenabgleichsergebnis.

**6.** Positionierungsverfahren für ein autonomes Fahrzeug nach einem der Ansprüche 1 bis 5, wobei die Abweichungsdaten eine laterale Abweichung zwischen dem Kartenabgleichsergebnis und dem Ergebnis einer dynamischen Differenzialpositionierung in Echtzeit sind.

**7.** Steuervorrichtung, umfassend einen Prozessor und eine Speichervorrichtung, die eine Vielzahl von Programmcodes speichert, wobei die Programmcodes angepasst sind, um geladen und durch den Prozessor ausgeführt zu werden, um das Positionierungsverfahren für ein autonomes Fahrzeug nach einem der Ansprüche 1 bis 6 durchzuführen.

**8.** Nichttransitorisches computerlesbares Speichermedium, das eine Vielzahl von Programmcodes speichert, wobei die Programmcodes angepasst sind, um geladen und durch einen Prozessor ausgeführt zu werden, um das Positionierungsverfahren für ein autonomes Fahrzeug nach einem der Ansprüche 1 bis 6 durchzuführen.

**9.** Fahrzeug, umfassend die Steuervorrichtung nach Anspruch 7.


**Revendications**

**1.** Procédé de positionnement pour un véhicule autonome, le procédé comprenant :

lorsque (S101) à la fois un résultat de cartospondance et un résultat de positionnement différentiel dynamique en temps réel du véhicule autonome existent, l'obtention de données d'écart entre le résultat de cartospondance et le résultat de positionnement différentiel dynamique en temps réel en temps réel en appliquant un algorithme du filtre de Kalman ; et
lorsque (S102) le résultat de cartospondance ou le résultat de positionnement différentiel dynamique en temps réel est manquant, l'obtention d'un résultat de positionnement global du véhicule autonome sur la base des données d'écart obtenues ;
l'obtention d'un résultat de positionnement global du véhicule autonome sur la base des données d'écart obtenues comprenant :

lorsque le résultat de cartospondance est manquant, l'obtention du résultat de cartospondance sur la base du résultat de positionnement différentiel dynamique en temps réel et des données d'écart ; et
l'obtention du résultat de positionnement global du véhicule autonome sur la base du résultat de positionnement différentiel dynamique en temps réel et du résultat de cartospondance obtenu.

**2.** Procédé de positionnement pour un véhicule autonome selon la revendication 1, dans lequel
l'obtention de données d'écart entre le résultat de cartospondance et le résultat de positionnement différentiel dynamique en temps réel en temps réel en appliquant un algorithme du filtre de Kalman comprend :

l'établissement (S1011) d'une équation d'observation de l'algorithme du filtre de Kalman, une quantité d'état de l'équation d'observation étant une valeur observée des données d'écart ;
l'établissement (S1012) d'une équation de mesure de l'algorithme du filtre de Kalman sur la base du résultat de cartospondance et du résultat de positionnement différentiel dynamique en temps réel ;
l'obtention (S1013) d'un résidu de l'algorithme du filtre de Kalman en fonction de l'équation d'observation et de l'équation de mesure ; et
la réalisation (S1014) d'une mise à jour itérative sur la valeur observée des données d'écart sur la base du résidu et du bruit observé de l'algorithme du filtre de Kalman, pour obtenir les données d'écart en temps réel.

**3.** Procédé de positionnement pour un véhicule autonome selon la revendication 2, comprenant en outre l'obtention de bruit observé actuel de l'algorithme du filtre de Kalman selon les étapes suivantes :

lorsque (S201) à la fois le résultat de cartospondance et le résultat de positionnement différentiel dynamique en temps réel du véhicule autonome existent, l'obtention du bruit observé actuel sur la base du résultat de cartospondance et du résultat de positionnement différentiel dynamique en temps réel ; et

lorsque (S202) le résultat de cartospondance ou le résultat de positionnement différentiel dynamique en temps réel n'existe pas, l'obtention du bruit observé actuel sur la base d'une valeur empirique prédéfinie ou d'un bruit observé au moment précédent.

4. Procédé de positionnement pour un véhicule autonome selon la revendication 3, dans lequel l'obtention du bruit observé actuel sur la base du résultat de cartospondance et du résultat de positionnement différentiel dynamique en temps réel comprend :

la transformation séparément du résultat de cartospondance et du résultat de positionnement différentiel dynamique en temps réel dans une période de temps historique prédéfinie avant un moment actuel dans un système de coordonnées de carrosserie de véhicule ;

l'obtention, sur la base d'un résultat de cartospondance et d'un résultat de positionnement différentiel dynamique en temps réel dans le système de coordonnées de carrosserie de véhicule, de données d'écart entre le résultat de cartospondance et le résultat de positionnement différentiel dynamique en temps réel ; et l'obtention du bruit observé actuel sur la base d'une variation des données d'écart dans la période de temps historique prédéfinie.

5. Procédé de positionnement pour un véhicule autonome selon l'une quelconque des revendications 1 à 4, dans lequel l'obtention d'un résultat de positionnement global du véhicule autonome sur la base des données d'écart obtenues comprend :

l'obtention du résultat de positionnement différentiel dynamique en temps réel sur la base du résultat de cartospondance et des données d'écart lorsque le résultat de positionnement différentiel dynamique en temps réel est manquant ; et

l'obtention du résultat de positionnement global du véhicule autonome sur la base du résultat de positionnement différentiel dynamique en temps réel obtenu et du résultat de cartospondance.

6. Procédé de positionnement pour un véhicule autonome selon l'une quelconque des revendications 1 à 5, dans lequel les données d'écart sont un écart latéral entre le résultat de cartospondance et le résultat de positionnement différentiel dynamique en temps réel.

7. Appareil de commande, comprenant un processeur et un appareil de stockage contenant une pluralité de codes de programme, dans lequel les codes de programme sont adaptés pour être chargés et exécutés par le processeur pour mettre en œuvre le procédé de positionnement pour un véhicule autonome selon l'une quelconque des revendications 1 à 6.

8. Support de stockage non transitoire lisible par ordinateur contenant une pluralité de codes de programme, dans lequel les codes de programme sont adaptés pour être chargés et exécutés par un processeur pour mettre en œuvre le procédé de positionnement pour un véhicule autonome selon l'une quelconque des revendications 1 à 6.

9. Véhicule, comprenant l'appareil de commande selon la revendication 7.

S101

When both a map matching result and a real-time dynamic differential positioning result of an autonomous vehicle exist, obtain deviation data between the map matching result and the real-time dynamic differential positioning result of the autonomous vehicle in real time by applying a Kalman filter algorithm

S102

When the map matching result or the real-time dynamic differential positioning result is missing, obtain a global positioning result of the autonomous vehicle based on the deviation data obtained

*FIG. 1*

S1011

Establish an observation equation of a Kalman filter algorithm, a state quantity of the observation equation being an observed value of deviation data

S1012

Establish a measurement equation of the Kalman filter algorithm based on a map matching result and a real-time dynamic differential positioning result

S1013

Obtain a residual of the Kalman filter algorithm according to the observation equation and the measurement equation

S1014

Perform an iterative update on the observed value of the deviation data based on the residual and observed noise of the Kalman filter algorithm, to obtain the deviation data in real time

*FIG. 2*

S201

When both a map matching result and a real-time dynamic differential positioning result of an autonomous vehicle exist, obtain current observed noise based on the map matching result and the real-time dynamic differential positioning result

S202

When the map matching result or the real-time dynamic differential positioning result of the autonomous driving does not exist, obtain the current observed noise based on a preset empirical value or observed noise at the previous moment

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310122887
- US 20190094883 A1
- US 20210156711 A1
- US 20110118979 A1